(19) Europäisches Patentamt / European Patent Office / Office européen des brevets

(11) **EP 3 001 429 B1**

(12) **EUROPEAN PATENT SPECIFICATION**

(45) Date of publication and mention
of the grant of the patent:
**04.10.2017 Bulletin 2017/40**

(21) Application number: **14800424.5**

(22) Date of filing: **19.05.2014**

(51) Int Cl.:
*H01B 7/29* (2006.01)        *C08J 3/20* (2006.01)
*C08L 27/12* (2006.01)      *C08L 79/08* (2006.01)
*H01B 3/30* (2006.01)        *H01B 3/44* (2006.01)
*H01B 13/14* (2006.01)

(86) International application number:
**PCT/JP2014/063245**

(87) International publication number:
**WO 2014/189017 (27.11.2014 Gazette 2014/48)**

(54) **COVERING MATERIAL FOR HEAT RESISTANT ELECTRIC WIRE, ITS PRODUCTION METHOD, AND ELECTRIC WIRE**

ABDECKMATERIAL FÜR WÄRMEBESTÄNDIGE ELEKTRISCHE DRÄHTE, VERFAHREN ZUR HERSTELLUNG DAVON UND ELEKTRISCHER DRAHT

MATÉRIAU COUVRANT POUR CÂBLES ÉLECTRIQUES RÉSISTANT À LA CHALEUR, SON PROCÉDÉ DE PRODUCTION ET CÂBLE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.05.2013    JP 2013108993**
         **13.12.2013    JP 2013258714**

(43) Date of publication of application:
**30.03.2016 Bulletin 2016/13**

(73) Proprietor: **Asahi Glass Company, Limited**
**Tokyo 100-8405 (JP)**

(72) Inventors:
• **HOSODA, Tomoya**
**Tokyo 100-8405 (JP)**
• **ABE, Masatoshi**
**Tokyo 100-8405 (JP)**
• **SATO, Takashi**
**Tokyo 100-8405 (JP)**

(74) Representative: **Müller-Boré & Partner
Patentanwälte PartG mbB
Friedenheimer Brücke 21
80639 München (DE)**

(56) References cited:
EP-A1- 0 893 471      EP-A1- 2 592 116
EP-A1- 2 818 516      EP-A1- 2 832 771
EP-A1- 2 937 870      WO-A1-2011/024809
JP-A- H09 118 802     JP-A- H11 209 548
US-A- 6 121 353

EP 3 001 429 B1

**Description**

The present invention relates to a covering material for a heat resistant electric wire, its production method, and an electric wire.

As represented by a tetrafluoroethylene polymer, a fluorinated resin is excellent in heat resistance, flame retardance, chemical resistance, weather resistance, non-tackiness, low friction property and low dielectric property. It is, therefore, used in a wide range of fields including e.g. a coating material for heat-resistant non-flammable electric wires, a corrosion-resistant piping material for chemical plants, an agricultural plastic greenhouse material, a release coating material for kitchen utensil, etc. Particularly, a tetrafluoroethylene/perfluoro(alkyl vinyl ether) copolymer (hereinafter sometimes referred to as "PFA") and an ethylene/tetrafluoroethylene copolymer (hereinafter sometimes referred to as "ETFE") are excellent in the above-mentioned characteristics specific to fluorinated resins and are melt-moldable, and their applications and molding methods are many. Among them, PFA is a perfluorinated polymer like polytetrafluoroethylene (hereinafter sometimes referred to as "PTFE") and has excellent physical properties such as heat resistance, electric properties, etc. comparable to PTFE.

A fluorinated resin or a composition containing a fluorinated resin (a fluorinated copolymer composition) to be used for a covering material for an electric wire is required to have favorable stress crack resistance at high temperature. The above-described melt-moldable fluorinated resin such as ETFE or PFA may be insufficient in the stress crack resistance at high temperature of 250°C or higher.

Under these circumstances, Patent Document 1 discloses a fluorinated resin excellent in the characteristics such as mechanical strength at 170°C. However, the fluorinated resin has a low melting point, has no stress crack resistance at 250°C or higher, and cannot be used for an application for which heat resistance is required, such as a covering material for an electric wire to be used at high temperature.

Patent Document 2 proposes a covering material comprising a fluorinated copolymer composition, excellent in the stress crack resistance at 250°C, and discloses its application as a covering material for a heat resistant electric wire e.g. for aircraft. However, a covering material for aircraft is required to have stress crack resistance at a temperature higher than 250°C.

Further, Patent Document 3 discloses as a resin composition to be used e.g. for separation claws in a fixing roll of a copying machine to separate copying paper from the fixing roll, a composition containing a fluorinated resin having a specific structure and a thermoplastic polyimide, excellent in the bending elastic modulus at high temperature.

PRIOR ART DOCUMENTS

PATENT DOCUMENTS

Patent Document 1: WO2010/110129

Patent Document 2: JP-A-2006-66329

Patent Document 3: JP-A-2012-113119

However, as a result of studies by the present inventors, when the resin composition as disclosed in Patent Document 3 is to be used as a covering material for an electric wire to cover a core wire of an electric wire, a weld line occurs at the covered portion and the covering may break from the weld line.

The object of the present invention is to provide a covering material for a heat resistant electric wire which can cover a core wire without breakage of a covering from a weld line, and which is excellent in the stress crack resistance at high temperature, the abrasion resistance, the water resistance and the chemical resistance, its production method, and an electric wire.

The subject matter of the present invention is characterized in the claims. Disclosed are the following items [1] to [16].

[1] A covering material for a heat resistant electric wire, which comprises a fluorinated copolymer composition containing a melt-moldable fluorinated copolymer (A) and a non-fluorinated thermoplastic resin (B1) in a volume ratio of (A)/(B1)=99/1 to 60/40,
wherein the non-fluorinated thermoplastic resin (B1) is contained in the fluorinated copolymer composition in the form of fine particles having an average dispersed particle size of at most 8 μm, and
the fluorinated copolymer composition has a storage elastic modulus of at least 90 MPa by dynamic viscoelasticity measurement at 200°C.

[2] The covering material for a heat resistant electric wire according to the above [1], wherein the non-fluorinated thermoplastic resin (B1) is a thermoplastic polyimide.

[3] A covering material for a heat resistant electric wire, which comprises a fluorinated copolymer composition containing a melt-moldable fluorinated copolymer (A) and a non-fluorinated resin (B2) having no melting point at 450°C or below, in a volume ratio of (A)/(B2)=99/1 to 60/40,

wherein the non-fluorinated resin (B2) is contained in the fluorinated copolymer composition in the form of fine particles having an average dispersed particle size of at most 8 $\mu$m, and

the fluorinated copolymer composition has a storage elastic modulus of at least 90 MPa by dynamic viscoelasticity measurement at 200°C.

[4] A covering material for a heat resistant electric wire, which comprises a fluorinated copolymer composition obtained by kneading a melt-moldable fluorinated copolymer (A) and a non-fluorinated resin (B2) having an average particle size of at most 8 $\mu$m and having no melting point at 450°C or below, in a volume ratio of (A)/(B2)=99/1 to 60/40, wherein the fluorinated copolymer composition has a storage elastic modulus of at least 90 MPa by dynamic viscoelasticity measurement at 200°C.

[5] The covering material for a heat resistant electric wire according to the above [3] or [4], wherein the non-fluorinated resin (B2) is a polyimide.

[6] The covering material for a heat resistant electric wire according to any one of the above [1] to [5], wherein the fluorinated copolymer (A) satisfies the following formula (1):

$$\alpha b - \alpha a \geq 5 \ (ppm/°C) \qquad (1)$$

wherein $\alpha a$ is the linear expansion coefficient of the fluorinated copolymer (A), and $\alpha b$ is the linear expansion coefficient of the fluorinated copolymer (A) after melt-kneaded in a kneading machine at 400°C for 10 minutes.

[7] The covering material for a heat resistant electric wire according to any one of the above [1] to [6], wherein the fluorinated copolymer (A) has at least one reactive functional group selected from the group consisting of a carbonyl group, a carbonate group, a hydroxy group, an epoxy group, a carbonyl dioxy group, a carboxy group, a haloformyl group, an alkoxy carbonyl group, an acid anhydride residue and an isocyanate group.

[8] The covering material for a heat resistant electric wire according to the above [7], wherein the content of the reactive functional groups is from 10 to 60,000 groups per $1 \times 10^6$ carbon atoms in the main chain of the fluorinated copolymer (A).

[9] The covering material for a heat resistant electric wire according to any one of the above [1] to [8], wherein the fluorinated copolymer (A) has constituent units (a1) based on tetrafluoroethylene, constituent units (a2) based on a cyclic hydrocarbon monomer having an acid anhydride residue and a polymerizable unsaturated bond, and constituent units (a3) based on a fluorinated monomer (excluding tetrafluoroethylene), in a proportion of the constituent units (a1) of from 50 to 99.89 mol%, a proportion of the constituent units (a2) of from 0.01 to 5 mol% and a proportion of the constituent units (a3) of from 0.1 to 49.99 mol% based on the total molar quantity of the constituent units (a1), the constituent units (a2) and the constituent units (a3).

[10] The covering material for a heat resistant electric wire according to the above [9], wherein the cyclic hydrocarbon monomer is 5-norbornene-2,3-dicarboxylic acid anhydride.

[11] The covering material for a heat resistant electric wire according to the above [9] or [10], wherein the fluorinated monomer is at least one member selected from the group consisting of $CF_2=CFOR^{f1}$ (wherein $R^{f1}$ is a $C_{1-10}$ perfluoroalkyl group which may contain an oxygen atom between carbon atoms) and hexafluoropropylene.

[12] The covering material for a heat resistant electric wire according to any one of the above [1] to [11], wherein the fluorinated copolymer (A) has a melt flow rate at 372°C under a load of 49 N of from 0.5 to 15 g/10 min.

[13] The covering material for a heat resistant electric wire according to any one of the above [1] to [12], wherein the fluorinated copolymer composition has a retention of tensile elongation of at least 80% when dipped for 48 hours in a dipping test in a 50 wt% aqueous sulfuric acid solution, and a retention of tensile elongation of at least 70% when dipped in pure water at 100°C for 150 hours.

[14] A method for producing the covering material for a heat resistant electric wire as defined in the above [1] or [2], which comprises melt-kneading the melt-moldable fluorinated copolymer (A) and the non-fluorinated thermoplastic resin (B1) at a temperature of at least 400°C and less than 450°C to prepare the fluorinated copolymer composition.

[15] A method for producing the covering material for a heat resistant electric wire as defined in any one of the above [3] to [5], which comprises melt-kneading the melt-moldable fluorinated copolymer (A) and the non-fluorinated resin (B2) at a temperature of at least 400°C and less than 450°C to prepare the fluorinated copolymer composition.

[16] An electric wire comprising a core wire and a covering made of the covering material for a heat resistant electric wire as disclosed in any one of the above [1] to [13] formed on the surface of the core wire.

The covering material for a heat resistant electric wire of the present invention can cover a core wire without breakage of a covering from a weld line, and is excellent in the stress crack resistance at high temperature, the abrasion resistance, the water resistance and the chemical resistance.

According to the method for producing the covering material for a heat resistant electric wire of the present invention, it is possible to produce a covering material for a heat resistance electric wire which can cover a core wire without breakage of a covering from a weld line, and which is excellent in the stress crack resistance at high temperature.

Further, the electric wire of the present invention comprises a core wire and a covering formed of a covering material for a heat resistant electric wire excellent in the stress crack resistance at high temperature, formed on the surface of the core wire, and is thereby excellent in the reliability.

The covering material for a heat resistant electric wire of the present invention (hereinafter sometimes referred to as "covering material") comprises a fluorinated copolymer composition containing a melt-moldable fluorinated copolymer (A) and a non-fluorinated thermoplastic resin (B1) or a non-fluorinated resin (B2). In the fluorinated copolymer composition, the volume ratio of the fluorinated copolymer (A) to the non-fluorinated thermoplastic resin (B1) is (A)/(B1)=99/1 to 60/40, and the volume ratio of the fluorinated copolymer (A) to the non-fluorinated resin (B2) is (A)/(B2)=99/1 to 60/40.

[Fluorinated copolymer (A)]

The fluorinated copolymer composition which is the covering material for a heat resistant electric wire of the present invention contains a melt-moldable fluorinated copolymer (A).

The melt-moldable fluorinated copolymer (A) is preferably, in view of moldability, a copolymer such that a temperature at which the melt flow rate (hereinafter referred to as "MFR") is from 0.1 to 1,000/10 min is present, at a temperature higher by at least 20°C than the melting point of the copolymer. MFR is measured under a load of 49 N. MFR is an index of the molecular weight of the fluorinated copolymer (A), and a high MFR indicates a low molecular weight and a low MFR indicates a high molecular weight.

The fluorinated copolymer (A) is more preferably a copolymer such that a temperature at which MFR is from 0.5 to 100 g/10 min, more preferably from 1 to 30 g/10 min, most preferably from 5 to 20 g/10 min, is present at a temperature higher by at least 20°C than the melting point of the copolymer. When MFR is at least the lower limit of the above range, the moldability of the fluorinated copolymer composition, and the smoothness and the outer appearance of the surface of the covering formed from the fluorinated copolymer composition will be more excellent, and when it is at most the upper limit of the above range, the mechanical strength of the fluorinated copolymer composition containing the fluorinated copolymer (A) will be more excellent.

MFR of the fluorinated copolymer (A) at 372°C under a load of 49 N is preferably from 0.5 to 15 g/10 min, more preferably from 1 to 15 g/10 min, particularly preferably from 5 to 13 g/10 min, whereby the scrape abrasion resistance of a covering formed of the fluorinated copolymer composition is excellent.

MFR of the fluorinated copolymer (A) is an index of the molecular weight as described above. In order to lower MFR, a method of subjecting the fluorinated copolymer (A) to heat treatment to form a bridged structure to increase the molecular weight; or a method of reducing the amount of use of the radical polymerization initiator at the time of producing the fluorinated copolymer (A) may, for example, be mentioned.

The fluorinated copolymer (A) to be used in the present invention is highly likely to satisfy the following formula (1).

By using the fluorinated copolymer (A) which satisfies the following formula (1), in a case where the fluorinated copolymer composition contains the after-mentioned non-fluorinated thermoplastic resin (B1), the non-fluorinated thermoplastic resin (B1) is likely to be dispersed in the fluorinated copolymer composition in the form of fine particles having an average dispersed particle size of at most 8 $\mu$m. By using the fluorinated copolymer composition having the non-fluorinated thermoplastic resin (B1) dispersed in the form of fine particles having an average dispersed particle size of at most 8 $\mu$m as a covering material to cover a core wire of an electric wire, the core wire can be covered without breakage from a weld line. Further, the scrape abrasion resistance of the electric wire will be excellent.

Likewise, by using the fluorinated copolymer (A) which satisfies the following formula (1), in a case where the fluorinated copolymer composition contains the after-mentioned non-fluorinated resin (B2), the non-fluorinated resin (B2) is likely to be dispersed in the fluorinated copolymer composition in the form of fine particles having an average dispersed particle size of at most 8 $\mu$m, without agglomeration. By using the fluorinated copolymer composition having the non-fluorinated resin (B2) dispersed in the form of fine particles having an average dispersed particle size of at most 8 $\mu$m as a covering material to cover a core wire of an electric wire, the core wire can be covered without breakage from a weld line. Further, the scrape abrasion resistance of the electric wire will be excellent. By using a powder having an average particle size of at most 8 $\mu$m as the non-fluorinated resin (B2), a fluorinated copolymer composition having the non-fluorinated resin (B2) dispersed in the fluorinated copolymer composition in the form of fine particles having an average dispersed particle size of at most 8 μm will be obtained.

Further, the fluorinated copolymer composition containing the non-fluorinated thermoplastic resin (B1) or the non-fluorinated resin (B2) is excellent in the elastic modulus at high temperature and is likely to have a storage elastic modulus of at least 90 MPa by dynamic viscoelasticity measurement at 200°C. Accordingly, even when an electric wire having a covering formed of a covering material comprising the fluorinated copolymer composition is exposed to high temperature at 200°C or higher for a long period of time, the shape of the covering can be maintained. If the storage elastic modulus at 200°C is lower than 90 MPa, even though cracking or peeling does not occur in a stress crack resistance test at 275°C, the covering state tends to change, such that the covering elongates or the surface appearance of the covering is deteriorated. In a case where the fluorinated copolymer composition contains the after-mentioned non-fluorinated thermoplastic resin (B1), when the average dispersed particle size of the non-fluorinated thermoplastic resin (B1) and the storage elastic modulus of the fluorinated copolymer composition at 200°C satisfy the above-specified ranges, a covering excellent in the stress crack resistance with less change in the outer appearance after the stress crack resistance test can be formed. Likewise, in a case where the fluorinated copolymer composition contains the after-mentioned fluorinated resin (B2), when the average dispersed particle size of the non-fluorinated resin (B2) and the storage elastic modulus of the fluorinated copolymer composition at 200°C satisfy the above-specified ranges, a covering excellent in the stress crack resistance with less change in the outer appearance after the stress crack resistance test can be formed. Such a fluorinated copolymer composition also maintains flexibility characteristic of a fluorinated resin.

$$\alpha b - \alpha a \geq 5 \ (ppm/°C) \qquad (1)$$

In the formula (1), $\alpha a$ is the linear expansion coefficient of the fluorinated copolymer (A), and $\alpha b$ is the linear expansion coefficient of the fluorinated copolymer (A) after the fluorinated copolymer (A) is melt-kneaded by a kneading machine at 400°C for 10 minutes.

Here, the temperature of "400°C" is the temperature of the fluorinated copolymer (A) itself. Further, the condition "melt kneaded at 400°C for 10 minutes" means that the fluorinated copolymer (A) is introduced into the kneading machine and heated, and the fluorinated copolymer (A) is melt-kneaded within a range of 400±3°C (that is, from 397 to 403°C) over a period of 10 minutes after a point where the temperature of the fluorinated copolymer (A) reached 397°C. After the fluorinated copolymer (A) is melt-kneaded for 10 minutes, it is taken out from the kneading machine and left to stand and air-cooled at room temperature. Then, the linear expansion coefficient $\alpha b$ of the fluorinated copolymer (A) is measured. The amount of the sample at the time of melt-kneading is not particularly limited so long as the fluorinated copolymer (A) can be melt-kneaded under the above conditions.

To measure the linear expansion coefficient $\alpha a$, a strip sample of 4 mm × 55 mm × 0.25 mm obtained by press-molding the fluorinated copolymer (A) (pressing conditions: pressing temperature of 380°C, pressure of 10 MPa, pressing time of 5 minutes) and cutting the obtained sheet.

Measurement of the linear expansion coefficient is carried out after the sample is dried in an oven at 250°C for 2 hours to adjust the condition of the sample. For measurement, a thermomechanical analyzer (TMA/SS6100) manufactured by SII Nanotechnology Inc. is used, the sample is heated at a rate of 5 °C/min from 30°C to 250°C in an air atmosphere at a distance between chucks of 20 mm while applying a load of 2.5 g, and the displacement accompanying linear expansion of the sample is measured. After completion of the measurement, from the displacements of the sample from 50°C to 100°C, the linear expansion coefficient $\alpha a$ (ppm/°C) is obtained.

Measurement of the linear expansion coefficient $\alpha b$ is carried out in the same manner as the linear expansion coefficient $\alpha a$ except that a sample cut from the press-molded product of the fluorinated copolymer (A) after melt-kneaded by the kneading machine at 400°C for 10 minutes is used.

The fluorinated copolymer (A) preferably satisfies the following formula (2), more preferably satisfies the following formula (3), whereby a fluorinated copolymer composition which is more excellent in the elastic modulus at high temperature and is capable of forming a covering with more favorable stress crack resistance tends to be obtained. The fluorinated copolymer (A) preferably satisfies the following formula (4).

Further, the linear expansion coefficient $\alpha a$ of the fluorinated copolymer (A) is preferably from 0 to 250 (ppm/°C), more preferably from 0 to 200 (ppm/°C) in view of the dimensional stability.

$$\alpha b - \alpha a \geq 10 \ (ppm/°C) \qquad (2)$$

$$\alpha b - \alpha a \geq 50 \ (ppm/°C) \qquad (3)$$

$$\alpha b - \alpha a \leq 150 \ (ppm/°C) \qquad (4)$$

According to the present invention, the fluorinated copolymer (A) has at least one reactive functional group selected from the group consisting of a carbonyl group, a carbonate group, a hydroxy group, an epoxy group, a carbonyl dioxy group, a carboxy group, a haloformyl group, an alkoxy carbonyl group, an acid anhydride residue and an isocyanate group. The value ($\alpha b - \alpha a$) of the fluorinated copolymer (A) having such a reactive functional group is likely to satisfy the above range.

The reactive functional group is preferably a carbonate group, a carbonyl dioxy group, a carboxy group, a haloformyl group, an alkoxy carbonyl group or an acid anhydride residue, more preferably a haloformyl group, an alkoxy carbonyl group or an acid anhydride residue.

The haloformyl group is preferably a fluoroformyl group (also called a carbonyl fluoride group). Further, the alkoxy carbonyl group (also called an ester group) is preferably a methoxy carbonyl group, an ethoxy carbonyl group or the like.

The reactive functional group of the fluorinated copolymer (A) is most preferably the acid anhydride residue in that such a fluorinated copolymer (A) is excellent in the compatibility with the non-fluorinated thermoplastic resin (B1) and the non-fluorinated resin (B2) is easily dispersed.

The value ($\alpha b - \alpha a$) tends to increase as the amount of the reactive functional groups in the fluorinated copolymer (A) increases. Thus, the amount of the reactive functional groups of the fluorinated copolymer (A) is considered to correlate with the value ($\alpha b - \alpha a$) of the fluorinated copolymer (A). In order that the value ($\alpha b - \alpha a$) satisfies the above range, the content of the reactive functional groups is preferably from 10 to 60,000 groups per $1 \times 10^6$ carbon atoms in the main chain of the fluorinated copolymer (A). The content of the reactive functional groups is more preferably from 100 to 10,000 groups, most preferably from 300 to 5,000 groups per $1 \times 10^6$ carbon atoms in the main chain of the fluorinated copolymer (A).

The content (number) of the reactive functional groups per $1 \times 10^6$ carbon atoms in the main chain of the fluorinated copolymer (A) may be measured by NMR infrared absorption spectrum analysis or the like. For example, the content of the reactive functional groups may be calculated from the proportion of constituent units having the reactive functional group e.g. by infrared absorption spectrum analysis as disclosed in JP-A-2007-314720.

As a method for producing the fluorinated copolymer (A) having reactive functional groups, (1) a method of using a monomer having a reactive functional group when the fluorinated copolymer (A) is produced by polymerization reaction, (2) a method for producing the fluorinated copolymer (A) by polymerization reaction using a radical polymerization initiator or chain transfer agent having a reactive functional group, (3) a method of heating a fluorinated copolymer having no reactive functional group to partially heat decompose the copolymer thereby to form reactive functional groups (such as carbonyl groups) to obtain a fluorinated copolymer (A) having reactive functional groups, or (4) a method of graft-polymerizing a monomer having a functional group to a fluorinated copolymer having no reactive functional group to introduce reactive functional groups to the copolymer may, for example, be mentioned. The reactive functional groups are present on at least one of the main chain termini and the side chain of the fluorinated copolymer (A).

As a method for producing the fluorinated copolymer (A) having reactive functional groups, the method (1) is preferred.

The fluorinated copolymer (A) having acid anhydride residues is preferably a copolymer having constituent units (a1) based on tetrafluoroethylene (hereinafter sometimes referred to as "TFE"), constituent units (a2) based on a cyclic hydrocarbon monomer having an acid anhydride residue and a polymerizable unsaturated bond, and constituent units (a3) based on a fluorinated monomer (excluding TFE). Here, the acid anhydride residue of the constituent units (a2) corresponds to the reactive functional group.

The cyclic hydrocarbon monomer having an acid anhydride residue and a polymerizable unsaturated bond, which forms the constituent units (a2), may, for example, be itaconic anhydride (hereinafter sometimes referred to as "IAH"), citraconic anhydride (hereinafter sometimes referred to as "CAH"), 5-norbornene-2,3-dicarboxylic anhydride (hereinafter sometimes referred to as "NAH") or maleic anhydride, and they may be used alone or in combination of two or more. Among them, preferred is at least one member selected from the group consisting of IAH, CAH and NAH. By using at least one member selected from the group consisting of IAH, CAH and NAH, the fluorinated copolymer (A) having acid anhydride residues can easily be produced without any special polymerization method (as disclosed in JP-A-11-193312) required when maleic anhydride is used. Among IAH, CAH and NAH, NAH is more preferred, whereby such a fluorinated copolymer (A) is highly compatible with the non-fluorinated thermoplastic resin (B1), and the non-fluorinated resin (B2) is easily dispersed.

The fluorinated monomer forming the constituent units (a3) may, for example, be a fluoroolefin such as vinyl fluoride, vinylidene fluoride (hereinafter sometimes referred to as "VdF"), trifluoroethylene, chlorotrifluoroethylene (hereinafter sometimes referred to as "CTFE") or hexafluoropropylene (hereinafter sometimes referred to as "HFP"),

$CF_2=CFOR^{f1}$ (wherein $R^{f1}$ is a $C_{1-10}$ perfluoroalkyl group which may contain an oxygen atom between carbon atoms), $CF_2=CFOR^{f2}SO_2X^1$ (wherein $R^{f2}$ is a $C_{1-10}$ perfluoroalkylene group which may contain an oxygen atom between carbon atoms, and $X^1$ is a halogen atom or a hydroxy group), $CF_2=CFOR^{f3}CO_2X^2$ (wherein $R^{f3}$ is a $C_{1-10}$ perfluoroalkylene group which may contain an oxygen atom between carbon atoms, and $X^2$ is a hydrogen atom or an alkyl group having at most 3 carbon atoms), $CF_2=CF(CF_2)_pOCF=CF_2$ (wherein p is 1 or 2), $CH_2=CX^3(CF_2)_qX^4$ (wherein $X^3$ is a hydrogen atom or a fluorine atom, q is an integer of from 2 to 10, and $X^4$ is a hydrogen atom or a fluorine atom) or perfluoro(2-methylene-4-methyl-1,3-dioxolane).

Among such fluorinated monomers, preferred is at least one member selected from the group consisting of VdF, CTFE, HFP, $CF_2=CFOR^{f1}$ and $CH_2=CX^3(CF_2)_qX^4$, more preferred is $CF_2=CFOR^{f1}$ or HFP.

$CF_2=CFOR^{f1}$ may, for example, be $CF_2=CFOCF_2CF_3$, $CF_2=CFOCF_2CF_2CF_3$, $CF_2=CFOCF_2CF_2CF_2CF_3$ or $CF_2=CFO(CF_2)_8F$, and is preferably $CF_2=CFOCF_2CF_2CF_3$ (hereinafter sometimes referred to as "PPVE").

$CH_2=CX^3(CF_2)_qX^4$ may, for example, be $CH_2=CH(CF_2)_2F$, $CH_2=CH(CF_2)_3F$, $CH_2=CH(CF_2)_4F$, $CH_2=CF(CF_2)_3H$ or $CH_2=CF(CF_2)_4H$, and is preferably $CH_2=CH(CF_2)_4F$ or $CH_2=CH(CF_2)_2F$.

In the fluorinated copolymer (A), based on the total molar quantity of the constituent units (a1), the constituent units (a2) and the constituent units (a3), it is preferred that the proportion of the constituent units (a1) is from 50 to 99.89 mol%, the proportion of the constituent units (a2) is from 0.01 to 5 mol%, and the proportion of the constituent units (a3) is from 0.1 to 49.99 mol%, it is more preferred that the proportion of the constituent units (a1) is from 50 to 99.4 mol%, the proportion of the constituent units (a2) is from 0.1 to 3 mol%, and the proportion of the constituent units (a3) is from 0.5 to 49.9 mol%, and it is particularly preferred that the proportion of the constituent units (a1) is from 50 to 98.9 mol%, the proportion of the constituent units (a2) is from 0.1 to 2 mol%, and the proportion of the constituent units (a3) is from 1 to 49.9 mol%.

When the contents of the respective constituent units are within the above ranges, the fluorinated copolymer (A) is excellent in the heat resistance and the chemical resistance, and the fluorinated copolymer composition is excellent in the elastic modulus at high temperature.

Particularly when the content of the constituent units (a2) is within the above range, the amount of the acid anhydride residues of the fluorinated copolymer (A) will be appropriate, and such a fluorinated copolymer (A) is excellent in the compatibility with the non-fluorinated thermoplastic resin (B1), and the non-fluorinated resin (B2) is easily dispersed.

When the content of the constituent units (a3) is within the above range, the fluorinated copolymer (A) is excellent in the moldability, and a covering made of the fluorinated copolymer composition is more excellent in mechanical properties such as the stress crack resistance.

A content of the constituent units (a2) of 0.01 mol% based on the total molar quantity of the constituent units (a1), the constituent units (a2) and the constituent units (a3) corresponds to a content of the reactive functional groups of the fluorinated copolymer (A) of 100 groups per $1\times10^6$ carbon atoms in the main chain of the fluorinated copolymer (A). A content of the constituent units (a2) of 5 mol% based on the total molar quantity of the constituent units (a1), the constituent units (a2) and the constituent units (a3) corresponds to a content of the reactive functional groups of the fluorinated copolymer (A) of 50,000 groups per $1\times10^6$ carbon atoms in the main chain of the fluorinated copolymer (A).

The fluorinated copolymer (A) having the constituent units (a2) may contain, as a result of hydrolysis of a part of the cyclic hydrocarbon monomer having an acid anhydride residue and a polymerizable unsaturated bond, constituent units based on a dicarboxylic acid (such as itaconic acid, citraconic acid, 5-norbornene-2,3-dicarboxylic acid or maleic acid) corresponding to the acid anhydride residue in some cases. In a case where the constituent units based on such a dicarboxylic acid are contained, the content of the constituent units is included in the content of the constituent units (a2). Further, the contents of the respective constituent units may be calculated by melt NMR analysis, fluorine content analysis and infrared absorption spectrum analysis of the fluorinated copolymer (A).

The fluorinated copolymer (A) may contain, in addition to the above-described constituent units (a1) to (a3), constituent units (a4) based on a non-fluorinated monomer (excluding the cyclic hydrocarbon monomer having an acid anhydride residue and a polymerizable unsaturated bond) which is a monomer having no fluorine atom.

The non-fluorinated monomer may, for example, be an olefin having at most 3 carbon atoms such as ethylene or propylene, or a vinyl ester such as vinyl acetate, and one or more of such monomers may be used. Among them, preferred is ethylene, propylene or vinyl acetate, more preferred is ethylene.

In a case where the fluorinated copolymer (A) contains the constituent units (a4), the content of the constituent units (a4) is preferably from 5 to 90 mol, more preferably from 5 to 80 mol, most preferably from 10 to 65 mol per 100 mol of the total molar quantity of the constituent units (a1), the constituent units (a2) and the constituent units (a3).

Further, the total molar quantity of the constituent units (a1) to (a3) is preferably at least 60 mol%, more preferably at least 65 mol%, most preferably at least 68 mol% per 100 mol% of the total molar quantity of all the constituent units of the fluorinated copolymer (A). The preferred upper limit is 100 mol%.

A preferred fluorinated copolymer (A) may, for example, be specifically a TFE/PPVE/NAH copolymer, a TFE/PPVE/IAH copolymer, a TFE/PPVE/CAH copolymer, a TFE/HFP/IAH copolymer, a TFE/HFP/CAH copolymer, a TFE/VdF/IAH copolymer, a TFE/VdF/CAH copolymer, a $TFE/CH_2=CH(CF_2)_4F/IAH/E$ copolymer, a

TFE/CH$_2$=CH(CF$_2$)$_4$F/CAH/ethylene copolymer, a TFE/CH$_2$=CH(CF$_2$)$_2$F/IAH/ethylene copolymer, a TFE/CH$_2$=CH(CF$_2$)$_2$F/CAH/ethylene copolymer, a CTFE/CH$_2$=CH(CF$_2$)$_4$F/IAH/ethylene copolymer, a CTFE/CH$_2$=CH(CF$_2$)$_4$F/CAH/ethylene copolymer, a CTFE/CH$_2$=CH(CF$_2$)$_2$F/IAH/ethylene copolymer or a CTFE/CH$_2$=CH(CF$_2$)$_2$F/CAH/ethylene copolymer.

A method for producing the fluorinated copolymer (A) is not particularly limited and is preferably, for example, a polymerization method using a radical polymerization initiator. Such a polymerization method may, for example, be bulk polymerization, solution polymerization using an organic solvent such as a fluorinated hydrocarbon, a chlorinated hydrocarbon, a fluorochlorohydrocarbon, an alcohol or a hydrocarbon, suspension polymerization using an aqueous medium and an appropriate organic solvent as the case requires, or emulsion polymerization using an aqueous medium and an emulsifier, and among them, solution polymerization is preferred.

The radical polymerization initiator is preferably an initiator, of which the temperature at which its half-life is 10 hours, is within a range of from 0 to 100°C, more preferably from 20 to 90°C.

It may, for example, be specifically an azo compound such as azobis isobutyronitrile, a non-fluorinated diacyl peroxide such as isobutyryl peroxide, octanoyl peroxide, benzoyl peroxide or lauroyl peroxide, a peroxy dicarbonate such as diisopropyl peroxydicarbonate, a peroxyester such as tert-butyl peroxypivalate, tert-butyl peroxyisobutyrate or tert-butyl peroxyacetate, a fluorinated diacyl peroxide such as a compound represented by $(Z(CF_2)_rCOO)_2$ (wherein Z is a hydrogen atom, a fluorine atom or a chlorine atom, and r is an integer of from 1 to 10), or an inorganic peroxide such as potassium persulfate, sodium persulfate or ammonium persulfate.

At the time of polymerization, it is preferred to use a chain transfer agent to control the melt viscosity of the fluorinated copolymer (A).

The chain transfer agent may be an alcohol such as methanol or ethanol, a chlorofluorohydrocarbon such as 1,3-dichloro-1,1,2,2,3-pentafluoropropane or 1,1-dichloro-1-fluoroethane, or a hydrocarbon such as pentane, hexane or cyclohexane.

Further, as at least one of the radical polymerization initiator and the chain transfer agent, a compound having a reactive functional group may be used as described above, whereby reactive functional groups can be introduced to the fluorinated copolymer (A) to be produced.

Such a radical polymerization initiator may, for example, be di-n-propyl peroxydicarbonate, diisopropyl peroxycarbonate, t-butyl peroxyisopropyl carbonate, bis(4-t-butylcyclohexyl) peroxydicarbonate or di-2-ethylhexyl peroxydicarbonate, and the chain transfer agent may, for example, be acetic acid, acetic anhydride, methyl acetate, ethylene glycol or propylene glycol.

The solvent used in solution polymerization may, for example, be a perfluorocarbon, a hydrofluorocarbon, a chlorohydrofluorocarbon or a hydrofluoroether. The number of carbon atoms is preferably from 4 to 12.

The perfluorocarbon may, for example, be specifically perfluorocyclobutane, perfluoropentane, perfluorohexane, perfluorocyclopentane or perfluorocyclohexane.

The hydrofluorocarbon may, for example, be specifically 1-hydroperfluorohexane.

The chlorohydrofluorocarbon may, for example, be specifically 1,3-dichloro-1,1,2,2,3-pentafluoropropane.

The hydrofluoroether may, for example, be methyl perfluorobutyl ether, 2,2,2-trifluoroethyl 2,2,1,1-tetrafluoroethyl ether.

The polymerization conditions are not particularly limited, and the polymerization temperature is preferably from 0 to 100°C, more preferably from 20 to 90°C. The polymerization pressure is preferably from 0.1 to 10 MPa, more preferably from 0.5 to 3 MPa. The polymerization time is preferably from 1 to 30 hours.

In a case where the fluorinated copolymer (A) having constituent units (a2) is to be obtained by polymerization, the concentration of the cyclic hydrocarbon monomer having an acid anhydride residue and a polymerizable unsaturated bond during polymerization is preferably from 0.01 to 5 mol%, more preferably from 0.1 to 3 mol%, most preferably from 0.1 to 2 mol% based on all the monomers. If the concentration of the monomer is too high, the polymerization rate tends to decrease, and when it is within the above range, the polymerization rate at the time of production is appropriate, the obtainable fluorinated copolymer (A) is excellent in the compatibility with the non-fluorinated thermoplastic resin (B1), and the non-fluorinated resin (B2) tends to be easily dispersed. It is preferred to continuously or intermittently supply the cyclic hydrocarbon monomer having an acid anhydride residue and a polymerizable unsaturated bond to make up for the consumption of the monomer during the polymerization, so as to maintain the concentration of the monomer within the above range.

[Non-fluorinated thermoplastic resin (B1) and non-fluorinated resin (B2)]

The fluorinated copolymer composition which is the covering material for a heat resistant electric wire of the present invention contains the non-fluorinated thermoplastic resin (B1) or the non-fluorinated resin (B2). When the composition contains the non-fluorinated thermoplastic resin (B1) or the non-fluorinated resin (B2), the storage elastic modulus of the fluorinated copolymer composition at 200°C tends to be at least 90 MPa, and a covering excellent in the stress crack resistance for example in an environment at higher than 250°C is likely to form. Further, an electric wire having the covering formed thereon tends to be excellent in the scrape abrasion resistance. The non-fluorinated thermoplastic resin (B1) is dispersed in the fluorinated copolymer composition in the form of particles having an average dispersed particle size of at most 8 μm by kneading the fluorinated copolymer composition. The non-fluorinated resin (B2) is a powder or a fibril-form powder preliminarily adjusted to have an average particle size of at most 8 μm, and by kneading the fluorinated copolymer composition, it is dispersed in the fluorinated copolymer composition in the form of particles having an average dispersed particle size of at most 8 μm.

(Non-fluorinated thermoplastic resin (B1))

The non-fluorinated thermoplastic resin (B1) is a thermoplastic resin containing no fluorine atom in its molecule. The non-fluorinated thermoplastic resin (B1) may, for example, be polycarbonate, polyethylene terephthalate, polyethylene naphthalate, polybutylene terephthalate, polyacrylate, polycaprolactone, a phenoxy resin, polysulfone, polyether sulfone, polyether ketone, polyether ether ketone (hereinafter sometimes referred to as "PEEK"), polyetherimide (hereinafter sometimes referred to as "PEI"), a semiaromatic polyamide, polyamide 6, polyamide 66, polyamide 11, polyamide 12, polyamide 610, polyphenylene oxide, polyphenylene sulfide, polytetrafluoroethylene, an acrylonitrile/styrene/butadiene copolymer (ABS), polymethyl methacrylate (PMMA), polypropylene, polyethylene, polybutadiene, a butadiene/styrene copolymer, an ethylene/propylene copolymer, an ethylene/propylene/diene rubber (EPDM), a styrene/butadiene block copolymer, a butadiene/acrylonitrile copolymer, an acrylic rubber, a styrene/maleic anhydride copolymer, a styrene/phenyl maleimide copolymer, aromatic polyester, polyamide imide (hereinafter sometimes referred to as "PAI") or thermoplastic polyimide (hereinafter sometimes referred to as "TPI"). Such non-fluorinated thermoplastic resins (B1) may be used alone or in combination of two or more. The non-fluorinated thermoplastic resin (B1) is preferably TPI, whereby a fluorinated copolymer composition excellent in the elastic modulus at high temperature and having a storage elastic modulus of at least 90 MPa by dynamic viscoelasticity measurement at 200°C is likely to be obtained.

Of the non-fluorinated thermoplastic resin (B1), MFR at the after-mentioned kneading temperature under a load of 49 N is preferably from 0.5 to 200 g/10 min, more preferably from 1 to 100 g/10 min, most preferably from 3 to 50 g/10 min. When MFR is within the above range, the non-fluorinated thermoplastic resin (B1) is excellent in the kneading property with the fluorinated copolymer (A), and a covering formed of the resulting fluorinated copolymer composition is more excellent in the surface smoothness and the mechanical strength.

The non-fluorinated thermoplastic resin (B1) is dispersed in the fluorinated copolymer composition in the form of fine particles having an average dispersed particle size of at most 8 μm. In this specification, the average dispersed particle size is obtained by observing the cut surface of a press-molded product of the fluorinated copolymer composition with a microscope.

(Non-fluorinated resin (B2))

The non-fluorinated resin (B2) is a resin containing no fluorine atom in its molecule and having no melting point at 450°C or below. By using as the non-fluorinated resin (B2) a powder or fibril-form powder having an average particle size of at most 8 μm, the non-fluorinated resin (B2) is contained in the fluorinated copolymer composition in the form of fine particles having an average dispersed particle size of at most 8 μm. Since the non-fluorinated resin (B2) has no melting point at 450°C or below, it is hardly melted by kneading at the time of production of the fluorinated copolymer composition.

The non-fluorinated resin (B2) preferably has a glass transition temperature at 450°C or below. The non-fluorinated resin (B2) having a glass transition temperature at 450°C or below is more likely to be dispersed in the fluorinated copolymer composition.

The glass transition temperature is a temperature at an inflection point on a differential scanning calorimetery curve (DSC curve) measured by a differential scanning calorimeter at a temperature-increasing rate of 10°C/min.

The non-fluorinated resin (B2) may, for example, be polyimide, polybenzimidazole or polyether ketone ketone. Such non-fluorinated resins (B2) may be used alone or in combination of two or more. The non-fluorinated resin (B2) is preferably a polyimide in view of availability and dispersability. According to the present invention, a mere "polyimide" means a polyimide which is not thermoplastic.

As the non-fluorinated resin (B2), a powder having an average particle size of at most 8 μm is used. The average particle size of the non-fluorinated resin (B2) is preferably at most 6 μm. By using, as a covering material, a fluorinated copolymer composition prepared by using the non-fluorinated resin (B2) having an average particle size within the above range to cover a core wire of an electric wire, the core wire can be covered without breakage from a weld line, and the covering formed of the fluorinated copolymer composition is excellent in the scrape abrasion resistance.

The average particle size of the non-fluorinated resin (B2) used is an average particle size (D50) at a point of 50% from the small particle size side on an accumulative volume distribution curve of the particle size distribution measured by a laser scattering particle size distribution measuring apparatus. Further, the average particle size of the non-fluorinated resin (B2) may be measured by another method, and for example, it may be calculated from an average of diameters of 5 particulate substances measured by observation with a scanning microscope.

The particle shape of the non-fluorinated resin (B2) is not particularly limited so long as the average particle size measured by the above apparatus is within the above range and it may, for example, be a powder shape or a fibril shape. A powder shape is preferred with a view to improving the surface smoothness of the obtainable covering on an electric wire.

[Covering material for heat resistant electric wire (fluorinated copolymer composition)]

The covering material for a heat resistant electric wire of the present invention comprises a fluorinated copolymer composition containing the melt-moldable fluorinated copolymer (A) and the non-fluorinated thermoplastic resin (B1) in a volume ratio of (A)/(B1)=99/1 to 60/40 or a fluorinated copolymer composition containing the melt-moldable fluorinated copolymer (A) and the non-fluorinated resin (B2) in a volume ratio of (A)/(B2)=99/1 to 60/40. When the above volume ratio of the fluorinated copolymer (A) to the non-fluorinated thermoplastic resin (B1) or the non-fluorinated resin (B2) is within the above range, in a case where the fluorinated copolymer composition contains the non-fluorinated thermoplastic resin (B1), the non-fluorinated plastic resin (B1) is likely to be dispersed in the fluorinated copolymer composition in the form of fine particles having an average dispersed particle size of at most 8 $\mu$m. Further, in a case where the fluorinated copolymer composition contains the non-fluorinated resin (B2), the non-fluorinated resin (B2) is likely to be dispersed in the fluorinated copolymer composition in the form of fine particles having an average dispersed particle size of at most 8 $\mu$m. Accordingly, by using the fluorinated copolymer composition as a covering material for a heat resistant electric wire to cover a core wire of an electric wire, a weld line will not occur at a covered portion, and breakage of the covering from a weld line will not occur. With a view to suppressing breakage of the covering from a weld line, the non-fluorinated thermoplastic resin (B1) is more preferably dispersed in the form of fine particles of at most 5 $\mu$m. Further, the obtained electric wire is excellent in the scrape abrasion resistance.

In view of excellent dispersability of the non-fluorinated thermoplastic resin (B1), the volume ratio of the non-fluorinated copolymer (A) to the non-fluorinated thermoplastic resin (B1) is preferably from (A)/(B1)=99/1 to 70/30, more preferably (A)/(B1)=97/3 to 75/25, most preferably (A)/(B1)=97/3 to 80/20. The volume ratio of the fluorinated copolymer (A) to the non-fluorinated resin (B2) is preferably (A)/(B2)=99/1 to 70/30, more preferably (A)/(B2)=97/3 to 75/25, most preferably (A)/(B2)=97/3 to 80/20, whereby the non-fluorinated resin (B2) is likely to be dispersed.

Further, since the fluorinated copolymer (A) has at least one reactive functional group, the fluorinated copolymer (A) is excellent in the compatibility with the non-fluorinated thermoplastic resin (B1), and the average dispersed particle size of the non-fluorinated thermoplastic resin (B1) tends to be smaller. Likewise, since the fluorinated copolymer (A) has at least one reactive functional group, the non-fluorinated resin (B2) is likely to be dispersed.

The storage elastic modulus of the fluorinated copolymer composition at 200°C is at least 90 MPa, preferably at least 95 MPa, more preferably at least 100 MPa. Such a high storage elastic modulus tends to be achieved by adding the non-fluorinated thermoplastic resin (B1) or the non-fluorinated resin (B2) to the fluorinated copolymer (A), and it is more likely to be achieved when TPI is used as the non-fluorinated thermoplastic resin (B1) or a polyimide is used as the non-fluorinated resin (B2).

The fluorinated copolymer composition may contain a filler, a pigment or another additive so long as its characteristics are not significantly impaired.

As the filler, an inorganic filler (D) is preferably contained. The inorganic filler may, for example, be specifically a fibrous filler (such as glass fibers, carbon fibers, boron fibers, aramid fibers, liquid crystal polyester fibers or stainless steel microfibers), or a powdery filler (such as talc, mica, graphite, molybdenum disulfide, polytetrafluoroethylene, calcium carbonate, silica, silica alumina, alumina or titanium dioxide). One or more of these inorganic fillers (D) may be used. The content of the inorganic filler (D) in the fluorinated copolymer composition is preferably such that the mass ratio of (fluorinated copolymer (A) + non-fluorinated thermoplastic resin (B1) or non-fluorinated resin (B2))/inorganic filler (D) is from 90/10 to 50/10. Within such a range, the fluorinated copolymer composition is excellent in the mechanical properties and the electrical properties.

The pigment may, for example, be a coloring pigment (E) such as an organic pigment or an inorganic pigment. Specific examples include carbon black (black pigment), iron oxide (red pigment), aluminum-cobalt oxide (blue pigment), copper phthalocyanine (blue pigment, green pigment), perylene (red pigment) and bismuth vanadate (yellow pigment).

The content of the pigment is preferably at most 20 mass%, particularly preferably at most 10 mass% in the fluorinated copolymer composition. If the content of the pigment exceeds 20 mass%, the non-tackiness and abrasion resistance of the fluorinated resin may be impaired.

The fluorinated copolymer composition has a retention of tensile elongation of at least 80%, more preferably at least 90% after dipped for 48 hours in a dipping test in a 50 wt% aqueous sulfuric acid solution. Further, it has a retention of tensile elongation of at least 70%, more preferably at least 80% after dipped in pure water at 100°C for 150 hours. The dipping test in an aqueous sulfuric acid solution indicates excellence of the chemical resistance and the dipping test in pure water indicates excellence in the water resistance. The non-fluorinated thermoplastic resin (B1) used in the fluorinated copolymer composition is inferior in the water resistance and the chemical resistance in many cases, however, the fluorinated copolymer composition comprised by the covering material of the present invention has favorable chemical resistance and water resistance even though such a non-fluorinated thermoplastic resin (B1) is used. Further, the retention of tensile elongation of the fluorinated copolymer composition is evaluated preferably by using a sheet obtainable by forming the fluorinated copolymer composition. In such a case, the retention of tensile elongation of the sheet obtainable by forming the fluorinated copolymer composition is preferably within the above range.

[Method for producing covering material for heat resistant electric wire]

In a case where the fluorinated copolymer composition which is the covering material of the present invention contains the non-fluorinated thermoplastic resin (B1), such a fluorinated copolymer composition is preferably produced by a method of melt-kneading the fluorinated copolymer (A) and the non-fluorinated thermoplastic resin (B1) and another component (such as a filler or a pigment) to be blended as the case requires by e.g. a kneading extruder.
For melt-kneading, various kneading machines may be used, and an extruder is preferred.
The screw of the kneading extruder is preferably twin screw type.
The melt-kneading temperature may be set depending upon the type of the fluorinated thermoplastic resin (B1) and is preferably at least 400°C and less than 450°C, more preferably from 400 to 430°C. When the temperature is at least 400°C, by melt-kneading, the compatibility between the fluorinated copolymer (A) and the non-fluorinated thermoplastic resin (B1) will improve, and the non-fluorinated thermoplastic resin (B1) is likely to be dispersed in the form of particles having an average dispersed particle size of at most 8 $\mu$m.
The retention time in the kneading extruder is preferably at least 10 seconds and at most 30 minutes. The number of revolutions of the screw is preferably at least 5 rpm and at most 1,500 rpm, more preferably at least 10 rpm and at most 500 rpm.
In a case where the fluorinated copolymer composition which is the covering material of the present invention contains the fluorinated resin (B2), such a fluorinated copolymer composition is preferably produced by a method of melt-kneading the fluorinated copolymer (A) and the non-fluorinated resin (B2) and another component (such as a filler or a pigment) to be blended as the case requires by e.g. a kneading extruder.
For melt-kneading, various kneading machines may be used, and an extruder is preferred.
The screw of the kneading extruder is preferably twin screw type.
The melt-kneading temperature may be set depending upon the type of the non-fluorinated resin (B2), and is preferably at least 400°C and less than 450°C, more preferably from 400 to 430°C. When the temperature is at least 400°C, by melt-kneading, the fluorinated resin (B2) is likely to be dispersed in the form of particles having an average dispersed particle size of at most 8 $\mu$m.
The retention time in the kneading extruder is preferably at least 10 seconds and at most 30 minutes. The number of revolutions of the screw is preferably at least 5 rpm and at most 1,500 rpm, more preferably at least 10 rpm and at most 500 rpm.

[Electric wire]

The electric wire of the present invention comprises a core wire and a covering formed of the above-described covering material formed on the surface of the core wire.
The covering material of the present invention is used to cover an electric wire. As a method of forming a covering on a core wire (conductor) to form an electric wire is not particularly limited, and preferred is a forming method wherein by means of an extruder, a molten resin (covering material) is extruded on a core wire of an electric wire to cover the core wire (electric wire forming).
The covering material of the present invention is formed of a fluorinated copolymer composition containing the melt-moldable fluorinated copolymer (A) and the non-fluorinated thermoplastic resin (B1) or the non-fluorinated resin (B2) in a specific volume ratio, wherein the non-fluorinated thermoplastic resin (B1) or the non-fluorinated resin (B2) is dispersed in the fluorinated copolymer composition and the storage elastic modulus is at least 90 MPa by dynamic viscoelasticity measurement at 200°C. Thus, a covering which is excellent in the elastic modulus at high temperature and which is excellent in the stress crack resistance can be formed. Further, when the covering is formed, the covering will not be separated from a weld line. Further, the obtained electric wire is excellent in the scrape abrasion resistance. Accordingly, the covering material of the present invention is suitably used to form a covering on an electric wire for which high heat resistance is required, such as an aircraft electric wire, a high voltage cable, a communication line or an electric heater wire. Since it is particularly excellent in the stress crack resistance at high temperature, it is suitably used for an aircraft electric wire. Further, the electric wire of the present invention, which has a covering formed of the above covering material, is excellent in the reliability.

EXAMPLES

Now, the present invention will be described in detail with reference to Examples, but it should be understood that the present invention is by no means restricted by the following description.

The copolymer composition, the content of reactive functional groups, the melting point, MFR and the linear expansion coefficient of the fluorinated copolymer (A), the storage elastic modulus of the fluorinated copolymer composition which is the covering material for a heat resistant electric wire, the average dispersed particle size of the non-fluorinated thermoplastic resin (B1) in the fluorinated copolymer composition, the average particle size and the glass transition temperature of the non-fluorinated resin (B2) were measured by the following methods. Further, the stress crack resistance and the scrape abrasion resistance of the electric wire were evaluated by the following methods.

[Fluorinated copolymer (A)]

(1) Copolymer composition

The copolymer composition was obtained by melt NMR analysis, fluorine content analysis and infrared absorption spectrum analysis.

(2) Content of reactive functional groups

The proportion of constituent units based on NAH having a reactive functional group in the fluorinated copolymer (A) was obtained by the following infrared absorption spectrum analysis.

The fluorinated copolymer (A) was press-formed to obtain a 200 $\mu$m film. In the infrared absorption spectrum, an absorption peak of constituent units based on NAH in the fluorinated copolymer appears at 1,778 cm$^{-1}$. The absorbance of the absorption peak was measured, and the proportion (mol%) of the constituent units based on NAH was obtained from the molar absorption coefficient of NAH of 20,810 mol$^{-1}$·L·cm$^{-1}$.

Further, where the proportion is a (mol%) for example, the number of reactive functional groups (acid anhydride groups) per $1 \times 10^6$ carbon atoms in the main chain is calculated as [$a \times 10^6/100$] groups.

(3) Melting point (°C)

By means of a differential scanning calorimeter (DSC apparatus) manufactured by Seiko Instruments & Electronics Ltd., the melting peak at the time of heating the fluorinated copolymer (A) at a rate of 10°C/min was recorded, and the temperature (°C) corresponding to the local maximum value was taken as the melting point (Tm).

Further, the melting point of the non-fluorinated thermoplastic resin (B1) was measured in the same manner.

(4) MFR (g/10 min)

By means of a melt indexer manufactured by Technol Seven Co., Ltd., the mass (g) of the fluorinated copolymer (A) flowing out from a nozzle having a diameter of 2 mm and a length of 8 nm for 10 minutes (unit time) at 372°C which is the temperature higher by at least 20°C than the melting point under a load of 5 kg (49 N), was measured.

MFR of the non-fluorinated thermoplastic resin (B1) was measured in the same manner. However, the temperature for measurement of MFR of the non-fluorinated thermoplastic resin (B1) was 420°C which is the temperature higher by at least 20°C than the melting point.

(5) Linear expansion coefficients $\alpha a$ and $\alpha b$ (ppm/°C)

(5-1) Preparation of sample

The fluorinated copolymer (A) was press-formed by a melt hot pressing machine manufactured by TESTER SANGYO CO., LTD. to obtain a sheet of 80 mm $\times$ 80 mm $\times$ 0.25 mm in thickness. The pressing conditions were such that the temperature was 380°C, the pressure was 10 MPa and the pressing time was 5 minutes. From the obtained sheet, a strip sheet of 4 mm $\times$ 55 mm $\times$ 0.25 mm was cut out and taken as a measurement sample.

(5-2) Measurement

The linear expansion coefficient was measured after the sample was dried in an oven at 250°C for 2 hours to adjust the condition of the sample. For measurement, by means of a thermal mechanical analyzer (TMA/SS6100) manufactured by SII Nanotechnology Inc., the sample was heated at a rate of 5°C/min from 30°C to 250°C in an air atmosphere at a distance between chucks of 20 mm while applying a load of 2.5 g, and the displacement accompanying the linear expansion of the sample was measured. After completion of the measurement, the linear expansion coefficient (ppm/°C) was obtained from the displacements of the sample from 50°C to 100°C.

(5-3) Melt-kneading at 400°C for 10 minutes

Among the linear expansion coefficients $\alpha a$ and $\alpha b$, the linear expansion coefficient $\alpha b$ was measured by the above method (5-2) with respect to a sample formed by the above method (5-1) using the fluorinated copolymer (A) melt-kneaded by a kneading machine at 400°C for 10 minutes and cooled to room temperature.

Melt-kneading in a kneading machine at 400°C for 10 minutes was specifically carried out as follows.

Into a Labo Plastomill kneader manufactured by Toyo Seiki Seisaku-Sho, Ltd., 40 g of the fluorinated copolymer (A) was introduced and heated, and over a period of 10 minutes from a point where the temperature of the fluorinated copolymer (A) reached 397°C, the fluorinated copolymer (A) was melt-kneaded at $400 \pm 3$°C at a number of revolutions of the screw of 30 rpm. After melt-kneading for 10 minutes, the fluorinated copolymer (A) was taken out from the kneading machine and left to stand at room temperature and air-cooled.

[Non-fluorinated thermoplastic resin (B1) and non-fluorinated resin (B2)]

(1) Average dispersed particle size ($\mu$m) of non-fluorinated thermoplastic resin (B1)

The pressed sheet (the above sheet of 80 mm $\times$ 80 mm $\times$ 0.25 mm in thickness) of the fluorinated copolymer composition to be measured was frozen in liquid nitrogen and then cut, whereupon the cross-section was observed by a scanning electron microscope "FE-SEM" manufactured by Hitachi High-Technologies Corporation. Diameters of 5 particles were measured with 3,000 magnifications by means of a length measuring function of "FE-SEM", and the average dispersed particle size was calculated from the average value. The respective particles were confirmed to be the non-fluorinated thermoplastic resin (B1) by element analysis by means of an energy dispersive X-ray analyzer (EDX).

(2) Average particle size ($\mu$m) of non-fluorinated resin (B2)

An accumulative volume distribution curve was drawn from the small particle size side by plotting the particle size distribution measured by a laser diffraction type particle size distribution measuring apparatus "SALD-3000 (tradename)" manufactured by Shimadzu Corporation, and the average particle size (D50) at an accumulative 50 vol% was taken as the average particle size of the non-fluorinated resin (B2). Measurement was carried out with respect to a sample prepared in such a manner than 0.1 g of the non-fluorinated resin (B2) was dipped in 20 cc of a 10% aqueous isopropyl alcohol solution and irradiated with ultrasonic waves for 30 seconds, and then 30 cc of pure water was added, and the mixture was further irradiated with ultrasonic waves for 30 seconds and left to stand at room temperature for 30 minutes.

(3) Glass transition temperature (°C) of non-fluorinated resin (B2)

The glass transition temperature is a temperature at the inflection point on a DSC curve obtained when the non-fluorinated resin (B2) was heated at a rate of 10°C/min by means of a differential scanning calorimeter (DSC apparatus) manufactured by Seiko Instruments & Electronics Ltd.

[Fluorinated copolymer composition (covering material) and electric wire]

(1) Storage elastic modulus (MPa)

(1-1) Preparation of sample

The fluorinated copolymer composition was press-formed by a melt hot pressing machine manufacture by TESTER SANGYO CO., LTD. to obtain a sheet having a thickness of 0.25 mm. The pressing conditions were such that the pressing temperature was 380°C, the pressure was 10 MPa and the pressing time was 5 minutes. A strip sample

of 30 mm $\times$ 5 mm $\times$ 0.25 mm in thickness was cut out from the sheet.

(1-2) Measurement

The storage elastic modulus is a value measured by dynamic viscoelasticity measurement at 200°C. Specifically, the sample was heated from 25°C at a heating rate of 2°C/min in tensile mold with a grip width of 20 mm, and the storage elastic modulus when the temperature reached 200°C was measured. The frequency was 1 Hz.

(2) Stress crack resistance (275°C)

An electric wire was put in an oven at 275°C and heat treated for 96 hours and then cured overnight at room temperature, and after a stress by self-diameter winding was applied to the electric wire, the electric wire was put in an oven at 275°C again and heat treated for 1 hour. Then, whether cracking on the covering and separation of the covering from the core wire occurred was confirmed. A sample having neither of cracking nor separation was evaluated as having favorable stress crack resistance. Further, a sample having cracking on the covering or separation of the covering from the core wire was evaluated as having poor stress crack resistance.

(3) Scrape abrasion resistance

An electric wire was cut into a sample having a length of 2 m, and the scrape abrasion resistance was measured by "MAGNET WIRE ABRASION TESTER (reciprocating type) (tradename)" manufactured by YASUDA SEIKI SEISAKUSHO, LTD. by a testing method in accordance with ISO6722-1 under the following conditions.

Needle diameter: 0.45$\pm$0.01 mm,
Needle material: SUS316 (in accordance with JIS G7602),
Abrasion distance: 15.5$\pm$1 mm,
Abrasion rate: 55$\pm$5 times/min,
Load: 7 N,
Test environment: 23$\pm$1°C.

The abrasion resistance is represented by the number of reciprocations of a needle required until the core wire is exposed from the covering by the reciprocating motion of the needle. The larger the abrasion resistance (number), the more excellent the scrape abrasion resistance.

(4) 50 wt% aqueous sulfuring acid solution dipping test

The fluorinated copolymer composition was press-formed by a melt hot pressing machine manufactured by TESTER SANGYO CO., LTD. to obtain a pressed sheet of 8$\times$8$\times$1 mm in thickness. The pressing conditions were such that the pressing temperature was 380°C, the pressure was 10 MPa and the pressing time was 5 minutes. The obtained pressed sheet was put in a pressure resistant container (diameter: 120, height: 125 mm) made of SUS in which an aqueous sulfuric acid solution adjusted to 50 wt% was put, so that the entire sheet was dipped in the aqueous sulfuric acid solution, and left to stand for 48 hours at room temperature in dark place.
Then, the pressed sheet was taken out from the container, washed with water and dried in a desiccator in which silica gel was put, and its shape was formed into a microdumbbell (thickness: 1 mm) in accordance with ASTM D1822, and subjected to a tensile test by means of Strograph manufactured by Toyo Seiki Seisaku-Sho, Ltd. in a constant temperature and constant humidity environment at a temperature of 23$\pm$2°C under a humidity of 50%$\pm$10%, under conditions of a gauge length of 7.6 mm and a tensile speed of 50 m/min. The ratio of the length of the sample at the time of fracture to the initial length of the sample was taken as the tensile elongation, and the value obtained by dividing the tensile elongation of the sample after dipping by the tensile elongation of the sample before dipping was taken as the retention of tensile elongation (%). A higher retention of tensile elongation means a higher resistance to the 50 wt% aqueous sulfuric acid solution.

(5) Pure water 100°C dipping test

The pressed sheet of 8$\times$8$\times$1 mm in thickness obtained in the same manner as (4) was put in a pressure-resistant container (diameter: 120, height: 125 mm) made of SUS in which pure water was put, so that the entire sheet was dipped in pure water, and then exposed to heat by means by "multiple safety drier MSO-60H" manufactured by FUTABA Co., Ltd. at 100°C for 150 hours. Then, in the same manner under the same conditions as in (4), the pressed sheet was washed with water, dried and subjected to a tensile test by means of Strograph manufactured by Toyo Seiki Seisaku-Sho, Ltd., and the retention of tensile elongation was obtained by the same calculation method as in (4). A higher retention of tensile elongation means a higher resistance to pure water at 100°C. Further, the pure water used was obtained by ultrapure water apparatus manufactured by Kurita Water Industries Ltd., and one controlled to have an electric resistance value of at least 15 MΩ·cm was used.

(Preparation Example 1) Preparation of fluorinated copolymer (A-1)

Fluorinated copolymer (A-1) was prepared as follows using TFE forming constituent units (a1), NAH ("himic anhydride" manufactured by Hitachi Chemical Company Limited) forming constituent units (a3) and $CF_2=CFO(CF_2)_3F$ (perfluoropropyl vinyl ether, manufactured by Asahi Glass Company, Limited) (hereinafter referred to as "PPVE") forming constituent units (a3).

First, 369 kg of 1,3-dichloro-1,1,2,2,3-pentafluoropropane (AK225cb, manufactured by Asahi Glass Company, Limited) (hereinafter referred to as "AK225cb") and 30 kg of PPVE were charged into a preliminarily evacuated polymerization vessel having an internal volume of 430 L and equipped with a stirrer. Then, inside of the polymerization vessel was heated to 50°C, and 50 kg of TFE was further charged, whereupon the pressure in the polymerization vessel was raised to 0.89 MPa/G. Here, "0.89 MPa/G" means a gage pressure of 0.89 MPa. The same applies hereinafter.

Then, a polymerization initiator solution having (perfluorobutyryl) peroxide dissolved in AK225cb at a concentration of 0.36 mass% was prepared, and polymerization was carried out while 3 L of the polymerization initiator solution was continuously added at a rate of 6.25 mL/min to the polymerization vessel. During the polymerization, TFE was continuously charged so that the pressure in the polymerization vessel was maintained to be 0.89 MPa/G. Further, a solution having NAH dissolved in AK225cb at a concentration of 0.3 mass% was continuously charged in an amount corresponding to 0.1 mol% based on the number of mols of TFE continuously charged.

After 8 hours from the initiation of the polymerization when 32 kg of TFE was charged, the temperature in the polymerization vessel was lowered to room temperature and at the same time, the pressure was purged to atmospheric pressure. The obtained slurry was separated from AK225cb by solid-liquid separation and then, the solid content was dried at 150°C for 15 hours to obtain 33 kg of fluorinated copolymer (A-1). The specific gravity of fluorinated copolymer (A-1) was 2.15.

From the results of melt NMR analysis, fluorine content analysis and infrared absorption spectrum analysis, the copolymer composition of fluorinated copolymer (A-1) was found to be constituent units (a1) based on TFE/constituent units (a2) based on NAH/constituent units (a3) based on PPVE = 97.9/0.1/2.0 (mol%).

Further, the content of reactive functional groups (acid anhydride residues) of fluorinated copolymer (A-1) was 1,000 groups per $1\times10^6$ carbon atoms in the main chain of fluorinated copolymer (A-1).

The melting point of fluorinated copolymer (A-1) was 300°C, and MFR at a temperature of 372°C which is higher by at least 20°C than the melting point under a load of 49 N was 17.6 g/10 min.

As the linear expansion coefficients of fluorinated copolymer (A-1), αa=139 ppm/°C, αb=218 ppm/°C, and αb-αa=79 ppm/°C.

(Reference Example 1) Fluorinated copolymer (A-2)

Using, as fluorinated copolymer (A-2), PFA (manufactured by Asahi Glass Company, Limited, tradename "Fluon PFA 73PT"), the linear expansion coefficients αb and αa were measured in the same manner as fluorinated copolymer (A-1). αa=168 ppm/°C, αb=170 ppm/°C, and αb-αa=2 ppm/°C.

(Preparation Example 2) Preparation of fluorinated copolymer (A-3)

Fluorinated copolymer (A-1) obtained in Preparation Example 1 was heat treated at 260°C for 24 hours to obtain fluorinated copolymer (A-3). Of fluorinated copolymer (A-3), the melting point was 305°C, and MFR at 372°C which is higher by at least 20°C than the melting point under a load of 49 N was 11.0 g/10 min.

As the linear expansion coefficients of fluorinated copolymer (A-3), αa=135 ppm/°C, αb=215 ppm/°C, and αb-αa=80 ppm/°C.

[Example 1]

Into a Labo Plastomill kneader manufactured by Toyo Seiki Seisaku-Sho, Ltd., fluorinated copolymer (A-1) and TPI (B-1) as the non-fluorinated thermoplastic resin (B1) were charged in a volume ratio of (A-1)/(B-1)=90/10, and melt-kneaded at a number of revolutions of the screw of 30 rpm for a kneading time of 10 minutes at a kneading temperature of 400°C.

Of the obtained fluorinated copolymer composition, the storage elastic modulus by dynamic viscoelasticity measurement at 200°C and the average dispersed particle size of TPI (B-1) contained were measured. The results are shown in Table 1.

As TPI (B-1), TPI: manufactured by Mitsui Chemicals, Inc., tradename "AURUM PD-500" was used. Of TPI (B-1), the melting point was 385°C, and MFR at 420°C which is higher by at least 20°C than the melting point was 31 g/10 min.

Then, using the obtained fluorinated copolymer composition as a covering material, electric wire forming (electric wire extrusion) to form a covering on a core wire was carried out. The forming conditions were such that the cylinder temperature was from 350 to 390°C, the die temperature was 390°C and the drawing rate was from 10 to 30 m/min, and an electric wire having a diameter of 2.8 mm, a covering thickness of 0.5 mm and a core wire diameter of 1.8 mm (stranded conductor) was obtained. In the electric wire, the covering was not broken from a weld line. As a result of the stress scratch resistance test of the electric wire, neither of cracking on the covering nor separation of the covering from the core wire was confirmed, and the covering had favorable stress crack resistance. Further, the scrape abrasion resistance was 6,377 times.

[Example 2]

A fluorinated copolymer composition was obtained in the same manner as in Example 1 except that the volume ratio (A-1)/(B-1) of fluorinated copolymer (A-1) to TPI (B-1) was 80/20, and measurements were carried out in the same manner as in Example 1. The results are shown in Table 1.

Further, using the obtained fluorinated copolymer composition as a covering material, an electric wire was obtained in the same manner as in Example 1. On the electric wire, the covering was not broken from a weld line. As a result of the stress crack resistance test of the electric wire, neither of cracking on the covering nor separation of the covering from the core wire was confirmed, and the covering had favorable stress crack resistance. Further, the scrape abrasion resistance was 6,501 times.

[Example 3]

A fluorinated copolymer composition was obtained in the same manner as in Example 1 except that fluorinated copolymer (A-3) was used instead of fluorinated copolymer (A-1), and various measurements, electric wire forming and the like were carried out in the same manner as in Example 1. Electric wire forming could be carried out without breakage of the covering from a weld line.

Further, as a result of the stress crack resistance test of the obtained electric wire, neither of cracking on the covering nor separation of the covering from the core wire was confirmed, and the covering had favorable stress crack resistance. Further, the scrape abrasion resistance was 28,656 times. The results are shown in Table 1.

[Example 4]

A fluorinated copolymer composition was obtained in the same manner as in Example 1 except that as the non-fluorinated resin (B2), a polyimide powder having an average particle size of 6 $\mu$m (manufactured by Daicel-Evonic Ltd., tradename "P84NT", product with an average particle size of 6 $\mu$m) was used instead of TPI (B-1), and various measurements, electric wire forming and the like were carried out in the same manner as in Example 1. However, among the forming conditions for the electric wire forming, the cylinder temperature was changed to 310 to 350°C, and the die temperature was changed to 350°C.

The polyimide powder used has a glass transition temperature of 337°C. Further, it has no melting point at least at 450°C or below, and is not melted at 400°C which is the kneading temperature.

The electric wire forming could be conducted without breakage of the covering from a weld line.

Further, the obtained covering of the electric wire had excellent surface smoothness, which indicated that the polyimide powder was not agglomerated in the covering and was dispersed in the form of fine particles.

Further, as a result of the stress crack resistance test of the obtained electric wire, neither of cracking on the covering nor separation of the covering from the core wire was confirmed, and the covering had favorable stress crack resistance. Further, the scrape abrasion resistance was 12,083 times.

[Example 5]

The fluorinated copolymer composition obtained in Example 2 was subjected to a dipping test in 50 wt% aqueous sulfuric acid solution for 48 hours and a dipping test in pure water at 100°C for 150 hours. The retentions of tensile elongation of the fluorinated copolymer composition after dipping were respectively 100.0% and 88.2%.

50 wt% aqueous sulfuric acid solution dipping test (48 hours): 44.36% before dipping, 44.36% after test

Pure water 100°C dipping test (150 hours): 44.36% before dipping, 39.11 % after test

[Comparative Example 1]

Into a Labo Plastomill kneader manufactured by Toyo Seiki Seisaku-Sho, Ltd., only fluorinated copolymer (A-1) was charged and melt-kneaded under the same conditions as in Example 1.

The storage elastic modulus of fluorinated copolymer (A-1) by dynamic viscoelasticity measurement at 200°C was measured, whereupon it was 66 MPa.

Further, electric wire forming was carried out in the same manner as in Example 1, whereupon an electric wire could be obtained without breakage of the covering from a weld line, however, the scrape abrasion resistance of the electric wire was 3,370 times.

[Comparative Example 2]

A fluorinated copolymer composition was obtained in the same manner as in Example 1 except that PAI (B-2) was used as the non-fluorinated thermoplastic resin (B1). The storage elastic modulus of the fluorinated copolymer composition by dynamic viscoelasticity measurement at 200°C was measured, whereupon it was 84 MPa.

Here, as PAI (B-2), "TORLON 400TF", tradename, manufactured by Solvay Advanced Polymers was used.

[Comparative Example 3]

A fluorinated copolymer composition was obtained in the same manner as in Example 1 except that PEI (B-3) was used as the non-fluorinated thermoplastic resin (B1). The storage elastic modulus of the fluorinated copolymer composition by dynamic viscoelasticity measurement at 200°C was measured, whereupon it was 88 MPa.

As PEI (B-3), "Ultem 1000, 1040, XH6050, STM1700" manufactured by SABIC was used.

[Comparative Example 4]

A fluorinated copolymer composition was obtained in the same manner as in Example 1 except that the volume ratio (A-1)/(B-1) of fluorinated copolymer (A-1) to TPI (B-1) was 80/20, and the melt-kneading was carried out at 380°C. The average dispersed particle size of TPI (B-1) contained in the fluorinated copolymer composition was measured, whereupon it was 10 $\mu$m.

An electric wire was to be obtained in the same manner as in Example 1 using the obtained fluorinated copolymer composition as a covering material, however, the covering was separated from a weld line, and covering itself could not be conducted on the core wire.

[Comparative Example 5]

A fluorinated copolymer composition was obtained in the same manner as in Example 1 except that fluorinated copolymer (A-2) in Reference Example 1 was used as the fluorinated copolymer (A), and the volume ratio (A-2)/(B-1) of fluorinated copolymer (A-1) to TPI (B-1) was 80/20. The average dispersed particle size of TPI (B-1) contained in the fluorinated copolymer composition was measured, whereupon it was 10 $\mu$m.

An electric wire was to be obtained in the same manner as in Example 1 using the obtained fluorinated copolymer composition as a covering material, however, a weld line formed, and the covering was separated from the weld line, and covering itself on the core wire could be conducted.

[Comparative Example 6]

A fluorinated copolymer composition was obtained in the same manner as in Example 4 except that a polyimide powder (manufactured by Daicel-Evonic Ltd., tradename "P84NT", product with an average particle size of 30 $\mu$m) having an average particle size of 30 $\mu$m was used as the polyimide powder, and measurements, electric wire forming and the like were carried out in the same manner.

The polyimide powder used has a glass transition temperature of 337°C. Further, it has no melting point at least at 450°C or below, and is not melted at 400°C which is the kneading temperature.

The storage elastic modulus of the fluorinated copolymer composition by dynamic viscoelasticity measurement at 200°C was measured, whereupon it was 114 MPa.

Further, electric wire forming was carried out in the same manner as in Example 1, whereupon an electric wire was obtained without breakage of the covering from a weld line, however, the scrape abrasion resistance of the electric wire was 3,447 times.

[Comparative Example 7]

Into a Labo Plastomill kneader manufactured by Toyo Seiki Seisaku-Sho, Ltd., fluorinated copolymer (A-1) and TPI (B-1) as the non-fluorinated thermoplastic resin (B-1) were charged in a volume ratio (A-1)/(B-1)=50/50, and melt-kneaded at a number of revolutions of the screw of 30 rpm for a kneading time of 10 minutes at a kneading temperature of 400°C.

Then, using the obtained fluorinated copolymer composition as a covering material, electric wire forming (electric wire extrusion) to form a covering on a core wire was carried out. The forming conditions were such that the cylinder temperature was 350 to 390°C, the die temperature was 390°C, the drawing rate was 10 to 30 m/min, and an electric wire having an electric wire diameter of 2.8 mm, a covering thickness of 0.5 mm and a core wire diameter of 1.8 mm (twisted wire) was to be obtained, however, a weld line formed, and the covering was separated from the weld line, and covering itself could not be conducted on the core wire.

[Comparative Example 8]

The dipping test was carried out in the same manner as in Example 5 by using as the thermoplastic resin (B1) only PEEK (manufactured by Solvay Advanced Polymers, tradename "KetaSpire (registered trademark) KT-820"). The retentions of elongation of the obtained (B1) were 78.6% and 68.0%, respectively.

50 wt% aqueous sulfuric acid solution dipping test (48 hours): 196.59 before dipping, 154.59 after test

Pure water 100°C dipping test (150 hours): 196.59 before dipping, 133.6 after test

[Table 1]

|  | Example 1 | Example 2 | Example 3 | Example 4 |
|---|---|---|---|---|
| Storage elastic modulus (MPa) | 108 | 131 | 111 | 118 |
| Average dispersed particle size ($\mu$m) of TPI (B-1) | 5 | 5 | 4 | - |
| Average particle size ($\mu$m) of polyimide powder | - | - | - | 6 |
| Breakage of covering from weld line | Nil | Nil | Nil | Nil |
| Stress crack resistance | Favorable | Favorable | Favorable | Favorable |
| Scrape abrasion resistance (times) | 6,377 | 6,501 | 28,656 | 12,083 |

As shown in Table 1, each of the fluorinated copolymer compositions in Examples 1 to 4 had a storage elastic modulus at 200°C of higher than 90 MPa and was excellent in the elastic modulus at high temperature. Further, in Examples 1 to 3, the average dispersed particle size of the non-fluorinated thermoplastic resin (B1) was at most 8 $\mu$m, and in Example 4, as the non-fluorinated resin (B2), one having an average particle size of 6 $\mu$m was used. Accordingly, in such Examples, breakage of the covering from a weld line did not occur, and an electric wire excellent in the stress crack resistance at high temperature and the scrape abrasion resistance was obtained.

Whereas each of the fluorinated copolymer compositions in Comparative Examples 1 to 3 had a low storage elastic modulus at 200°C. In Comparative Examples 4 and 5, since the average dispersed particle size of the non-fluorinated thermoplastic resin (B1) was large, even though a covering was to be formed on a core wire, using the fluorinated copolymer composition as a covering material, breakage from a weld line occurred, and covering itself on the core wire could not be conducted. In Comparative Example 6, the electric wire was inferior in the scrape abrasion resistance. Further, the fluorinated copolymer composition in Comparative Example 7 employs fluorinated copolymer (A-1) and the non-fluorinated thermoplastic resin (B-1) in the same manner as in Examples 1 and 2, however, since the volume ratio of (A-1) to (B-1) is out of the range of the present invention, when a covering was to be formed on a core wire using the composition as a covering material, breakage from a weld line occurred, and covering itself on the electric wire could not be conducted.

Further, it was found from Example 5 that the fluorinated copolymer composition comprised by the covering material of the present invention has excellent chemical resistance and water resistance. Further, in Comparative Example 8, the fluorinated copolymer (A) was not used and only non-fluorinated thermoplastic resin (B-1) was used, and thus the results of measurement of the chemical resistance and the water resistance were poor.

The covering material of the present invention is suitably used for forming a covering on an electric wire for which high heat resistance is required, such as an aircraft electric wire, a high voltage cable, a communication line or an electric heater wire, and is suitably used for an aircraft electric wire since it is particularly excellent in the stress crack resistance at high temperature.

The entire disclosures of Japanese Patent Application No. 2013-108993 filed on May 23, 2013 and Japanese Patent Application No. 2013-258714 filed on December 13, 2013 including specifications, claims and summaries are cited.

**Claims**

1. A covering material for a heat resistant electric wire, which comprises a fluorinated copolymer composition containing a melt-moldable fluorinated copolymer (A) and a non-fluorinated thermoplastic resin (B1) in a volume ratio of (A)/(B1)=99/1 to 60/40,

   wherein the non-fluorinated thermoplastic resin (B1) is contained in the fluorinated copolymer composition in the form of fine particles having an average dispersed particle size of at most 8 $\mu$m,

   the fluorinated copolymer composition has a storage elastic modulus of at least 90 MPa by dynamic viscoelasticity measurement at 200°C, and

   the fluorinated copolymer (A) has at least one reactive functional group selected from the group consisting of a carbonyl group, a carbonate group, a hydroxy group, an epoxy group, a carbonyl dioxy group, a carboxy group, a haloformyl group, an alkoxy carbonyl group, an acid anhydride residue and an isocyanate group.

2. The covering material for a heat resistant electric wire according to Claim 1, wherein the non-fluorinated thermoplastic resin (B1) is a thermoplastic polyimide.

3. A covering material for a heat resistant electric wire, which comprises a fluorinated copolymer composition containing a melt-moldable fluorinated copolymer (A) and a non-fluorinated resin (B2) having no melting point at 450°C or below, in a volume ratio of (A)/(B2)=99/1 to 60/40,

   wherein the non-fluorinated resin (B2) is contained in the fluorinated copolymer composition in the form of fine particles having an average dispersed particle size of at most 8 $\mu$m,

   the fluorinated copolymer composition has a storage elastic modulus of at least 90 MPa by dynamic viscoelasticity measurement at 200°C,

   the fluorinated copolymer (A) has at least one reactive functional group selected from the group consisting of a carbonyl group, a carbonate group, a hydroxy group, an epoxy group, a carbonyl dioxy group, a carboxy group, a haloformyl group, an alkoxy carbonyl group, an acid anhydride residue and an isocyanate group, and

   the melting point is determined by recording the melting peak at the time of heating at a rate of 10°C/min by means of a differential scanning calorimeter, and taking the temperature (°C) corresponding to the local maximum value as the melting point.

4. The covering material for a heat resistant electric wire according to Claim 3, wherein the non-fluorinated resin (B2) is a polyimide.

5. The covering material for a heat resistant electric wire according to any one of Claims 1 to 4, wherein the fluorinated copolymer (A) satisfies the following formula (1):

$$\alpha b - \alpha a \geq 5 \ (ppm/°C) \qquad (1)$$

   wherein $\alpha a$ is the linear expansion coefficient of the fluorinated copolymer (A), and $\alpha b$ is the linear expansion coefficient of the fluorinated copolymer (A) after melt-kneaded in a kneading machine at 400°C for 10 minutes.

6. The covering material for a heat resistant electric wire according to any one of Claims 1 to 5, wherein the content of the reactive functional groups is from 10 to 60,000 groups per $1\times10^6$ carbon atoms in the main chain of the fluorinated copolymer (A).

7. The covering material for a heat resistant electric wire according to any one of Claims 1 to 6, wherein the fluorinated copolymer (A) has constituent units (a1) based on tetrafluoroethylene, constituent units (a2) based on a cyclic hydrocarbon monomer having an acid anhydride residue and a polymerizable unsaturated bond, and constituent units (a3) based on a fluorinated monomer (excluding tetrafluoroethylene), in a proportion of the constituent units (a1) of from 50 to 99.89 mol%, a proportion of the constituent units (a2) of from 0.01 to 5 mol% and a proportion of the constituent units (a3) of from 0.1 to 49.99 mol% based on the total molar quantity of the constituent units (a1), the constituent units (a2) and the constituent units (a3).

8. The covering material for a heat resistant electric wire according to Claim 7, wherein the cyclic hydrocarbon monomer is 5-norbornene-2,3-dicarboxylic acid anhydride.

9. The covering material for a heat resistant electric wire according to Claim 7 or 8, wherein the fluorinated monomer is at least one member selected from the group consisting of $CF_2=CFOR^{f1}$ (wherein $R^{f1}$ is a $C_{1-10}$ perfluoroalkyl group which may contain an oxygen atom between carbon atoms) and hexafluoropropylene.

10. The covering material for a heat resistant electric wire according to any one of Claims 1 to 9, wherein the fluorinated copolymer (A) has a melt flow rate at 372°C under a load of 49 N of from 0.5 to 15 g/10 min.

11. The covering material for a heat resistant electric wire according to any one of Claims 1 to 10, wherein the fluorinated copolymer composition has a retention of tensile elongation of at least 80% when dipped for 48 hours in a dipping test in a 50 wt% aqueous sulfuric acid solution, and a retention of tensile elongation of at least 70% when dipped in pure water at 100°C for 150 hours.

12. A method for producing the covering material for a heat resistant electric wire as defined in Claim 1 or 2, which comprises melt-kneading the melt-moldable fluorinated copolymer (A) and the non-fluorinated thermoplastic resin (B1) at a temperature of at least 400°C and less than 450°C to prepare the fluorinated copolymer composition.

13. A method for producing the covering material for a heat resistant electric wire as defined in Claim 3 or 4, which comprises melt-kneading the melt-moldable fluorinated copolymer (A) and the non-fluorinated resin (B2) at a temperature of at least 400°C and less than 450°C to prepare the fluorinated copolymer composition.

14. An electric wire comprising a core wire and a covering made of the covering material for a heat resistant electric wire as disclosed in any one of Claims 1 to 11 formed on the surface of the core wire.

**Patentansprüche**

1. Mantelmaterial für einen wärmebeständigen Stromleiter, welches eine fluorierte Copolymerzusammensetzung, enthaltend ein schmelzformbares fluoriertes Copolymer (A) und ein nicht-fluoriertes thermoplastisches Harz (B1) in einem Volumenverhältnis von (A)/(B1)=99/1 bis 60/40 umfasst,
wobei das nicht-fluorierte thermoplastische Harz (B1) in der fluorierten Copolymerzusammensetzung in der Form von Feinteilchen mit einer gemittelten dispergierten Teilchengröße von höchstens 8 μm enthalten ist,
die fluorierte Copolymerzusammensetzung einen elastischen Speichermodul von mindestens 90 MPa durch dynamische Viskoelastizitätsmessung bei 200°C aufweist, und
das fluorierte Copolymer (A) mindestens eine reaktive funktionelle Gruppe, ausgewählt aus der Gruppe, bestehend aus einer Carbonylgruppe, einer Carbonatgruppe, einer Hydroxylgruppe, einer Epoxidgruppe, einer Carbonyldioxygruppe, einer Carboxylgruppe, einer Haloformylgruppe, einer Alkoxycarbonylgruppe, einem Säureanhydridrest und einer Isocyanatgruppe, aufweist.

2. Mantelmaterial für einen wärmebeständigen Stromleiter nach Anspruch 1, wobei das nicht-fluorierte thermoplastische Harz (B1) ein thermoplastisches Polyimid ist.

3. Mantelmaterial für einen wärmebeständigen Stromleiter, welches eine fluorierte Copolymerzusammensetzung, enthaltend ein schmelzformbares fluoriertes Copolymer (A) und ein nicht-fluoriertes Harz (B2) mit keinem Schmelzpunkt bei 450°C oder niedriger in einem Volumenverhältnis von (A)/(B2)=99/1 bis 60/40 umfasst,
wobei das nicht-fluorierte Harz (B2) in der fluorierten Copolymerzusammensetzung in der Form von Feinteilchen mit einer gemittelten dispergierten Teilchengröße von höchstens 8 μm enthalten ist,
die fluorierte Copolymerzusammensetzung einen elastischen Speichermodul von mindestens 90 MPa durch dynamische Viskoelastizitätsmessung bei 200°C aufweist,
das fluorierte Copolymer (A) mindestens eine reaktive funktionelle Gruppe, ausgewählt aus der Gruppe, bestehend aus einer Carbonylgruppe, einer Carbonatgruppe, einer Hydroxylgruppe, einer Epoxidgruppe, einer Carbonyldioxygruppe, einer Carboxylgruppe, einer Haloformylgruppe, einer Alkoxycarbonylgruppe, einem Säureanhydridrest und einer Isocyanatgruppe, aufweist, und

der Schmelzpunkt durch Aufzeichnen des Schmelz-Peaks zur Zeit des Erwärmens bei einer Rate von 10°C/min mit Hilfe eines Kalorimeters mit Differentialabtastung und Interpretieren der Temperatur (°C), welche dem lokalen Maximalwert entspricht, als den Schmelzpunkt, bestimmt wird.

4. Mantelmaterial für einen wärmebeständigen Stromleiter nach Anspruch 3, wobei das nicht-fluorierte Harz (B2) ein Polyimid ist.

5. Mantelmaterial für einen wärmebeständigen Stromleiter nach einem der Ansprüche 1 bis 4, wobei das fluorierte Copolymer (A) der folgenden Formel (1) gehorcht:

$$\alpha b - \alpha a \geq 5 \ (ppm/°C) \qquad (1)$$

wobei $\alpha a$ der lineare Ausdehnungskoeffizient des fluorierten Copolymers (A) ist und $\alpha b$ der lineare Ausdehnungskoeffizient des fluorierten Copolymers (A) nach Schmelzkneten in einer Knetmaschine bei 400°C für 10 Minuten ist.

6. Mantelmaterial für einen wärmebeständigen Stromleiter nach einem der Ansprüche 1 bis 5, wobei der Gehalt der reaktiven funktionellen Gruppen 10 bis 60000 Gruppen pro $1 \times 10^6$ Kohlenstoffatome in der Hauptkette des fluorierten Copolymers (A) beträgt.

7. Mantelmaterial für einen wärmebeständigen Stromleiter nach einem der Ansprüche 1 bis 6, wobei das fluorierte Copolymer (A) konstituierende Einheiten (a1), basierend auf Tetrafluorethylen, konstituierende Einheiten (a2), basierend auf einem cyclischen Kohlenwasserstoffmonomer mit einem Säureanhydridrest und einer polymerisierbaren ungesättigten Bindung, und konstituierenden Einheiten (a3), basierend auf einem fluorierten Monomer (Tetrafluorethylen ausgeschlossen), in einem Anteil der konstituierenden Einheiten (a1) von 50 bis 99,89 Mol-%, einem Anteil der konstituierenden Einheiten (a2) von 0,01 bis 5 Mol-% und einem Anteil der konstituierenden Einheiten (a3) von 0,1 bis 49,99 Mol-%, basierend auf der gesamten Molmenge der konstituierenden Einheiten (a1), der konstituierenden Einheiten (a2) und der konstituierenden Einheiten (a3), aufweist.

8. Mantelmaterial für einen wärmebeständigen Stromleiter nach Anspruch 7, wobei das cyclische Kohlenwasserstoffmonomer 5-Norbornen-2,3-dicarbonsäureanhydrid ist.

9. Mantelmaterial für einen wärmebeständigen Stromleiter nach Anspruch 7 oder 8, wobei das fluorierte Monomer mindestens ein Mitglied, ausgewählt aus der Gruppe, bestehend aus $CF_2=CFOR^{f1}$ (wobei $R^{f1}$ eine $C_{1-10}$-Perfluoroalkyl-gruppe, welche ein Sauerstoffatom zwischen Kohlenstoffatomen aufweisen kann, ist) und Hexafluorpropylen, ist.

10. Mantelmaterial für einen wärmebeständigen Stromleiter nach einem der Ansprüche 1 bis 9, wobei das fluorierte Copolymer (A) eine Schmelzflussrate bei 372°C unter einer Last von 49 N von 0,5 bis 15 g/10 min aufweist.

11. Mantelmaterial für einen wärmebeständigen Stromleiter nach einem der Ansprüche 1 bis 10, wobei die fluorierte Copolymerzusammensetzung eine Retention der Zugspannungsstreckung von mindestens 80% bei Eintauchen für 48 Stunden in einem Eintauchtest in eine 50 Gew.-%ige wässrige Schwefelsäurelösung und eine Retention der Zugspannungsstreckung von mindestens 70% bei Eintauchen in reines Wasser bei 100°C für 150 Stunden aufweist.

12. Verfahren zur Herstellung des Mantelmaterials für einen wärmebeständigen Stromleiter nach Anspruch 1 oder 2, welches Schmelzkneten des schmelzformbaren fluorierten Copolymers (A) und des nicht-fluorierten thermoplastischen Harzes (B1) bei einer Temperatur von mindestens 400°C und weniger als 450°C zum Herstellen der fluorierten Copolymerzusammensetzung umfasst.

13. Verfahren zur Herstellung des Mantelmaterials für einen wärmebeständigen Stromleiter nach Anspruch 3 oder 4, welches Schmelzkneten des schmelzformbaren fluorierten Copolymers (A) und des nicht-fluorierten Harzes (B2) bei einer Temperatur von mindestens 400°C und weniger als 450°C zum Herstellen der fluorierten Copolymerzusammensetzung umfasst.

14. Stromleiter, umfassend eine Kernader und einen Mantel, hergestellt aus dem Mantelmaterial für einen wärmebeständigen Stromleiter, wie in einem der Ansprüche 1 bis 11 offenbart, gebildet auf der Oberfläche der Kernader.

**Revendications**

1. Matériau de revêtement pour un fil électrique résistant à la chaleur, qui comprend une composition de copolymère fluoré contenant un copolymère fluoré pouvant être moulé à l'état fondu (A) et une résine thermoplastique non fluorée (B1) en un rapport en volume (A)/(B1) = 99/1 à 60/40, dans lequel
la résine thermoplastique non fluorée (B1) est contenue dans la composition de copolymère fluoré sous la forme de fines particules présentant une granulométrie dispersée moyenne d'au plus 8 μm,
la composition de copolymère fluoré présente un module élastique au stockage d'au moins 90 MPa d'après une mesure de viscoélasticité dynamique à 200°C, et
le copolymère fluoré (A) comporte au moins un groupe fonctionnel réactif choisi dans l'ensemble constitué par un groupe carbonyle, un groupe carbonate, un groupe hydroxy, un groupe époxy, un groupe carbonyldioxy, un groupe carboxy, un groupe halogénoformyle, un groupe alcoxycarbonyle, un résidu d'anhydride d'acide et un groupe isocyanate.

2. Matériau de revêtement pour un fil électrique résistant à la chaleur selon la revendication 1, dans lequel la résine thermoplastique non fluorée (B1) est un polyimide thermoplastique.

3. Matériau de revêtement pour un fil électrique résistant à la chaleur, qui comprend une composition de copolymère fluoré contenant un copolymère fluoré pouvant être moulé à l'état fondu (A) et une résine non fluorée (B2) ne présentant pas de point de fusion à 450°C ou moins, en un rapport en volume (A)/(B2) = 99/1 à 60/40, dans lequel
la résine non fluorée (B2) est contenue dans la composition de copolymère fluoré sous la forme de fines particules présentant une granulométrie dispersée moyenne d'au plus 8 μm,
la composition de copolymère fluoré présente un module élastique au stockage d'au moins 90 MPa d'après une mesure de viscoélasticité dynamique à 200°C, et
le copolymère fluoré (A) comporte au moins un groupe fonctionnel réactif choisi dans l'ensemble constitué par un groupe carbonyle, un groupe carbonate, un groupe hydroxy, un groupe époxy, un groupe carbonyldioxy, un groupe carboxy, un groupe halogénoformyle, un groupe alcoxycarbonyle, un résidu d'anhydride d'acide et un groupe isocyanate, et
le point de fusion est déterminé par enregistrement du pic de fusion au moment d'un chauffage à une vitesse de 10°C/min au moyen d'un calorimètre à balayage différentiel, et détermination, en tant que point de fusion, de la température (°C) correspondant à la valeur maximale locale.

4. Matériau de revêtement pour un fil électrique résistant à la chaleur selon la revendication 3, dans lequel la résine non fluorée (B2) est un polyimide.

5. Matériau de revêtement pour un fil électrique résistant à la chaleur selon l'une quelconque des revendications 1 à 4, dans lequel le copolymère fluoré (A) satisfait à la formule (1) suivante :

$$\alpha b - \alpha a \geq 5 \ (ppm/°C) \qquad\qquad (1)$$

dans laquelle $\alpha a$ est le coefficient de dilation linéaire du copolymère fluoré (A) et $\alpha b$ est le coefficient de dilatation linéaire du copolymère fluoré (A) après malaxage à l'état fondu dans une machine de malaxage à 400°C pendant 10 minutes.

6. Matériau de revêtement pour un fil électrique résistant à la chaleur selon l'une quelconque des revendications 1 à 5, dans lequel la teneur en groupes fonctionnels réactifs est de 10 à 60 000 groupes pour $1 \times 10^6$ atomes de carbone dans la chaîne principale du copolymère fluoré (A).

7. Matériau de revêtement pour un fil électrique résistant à la chaleur selon l'une quelconque des revendications 1 à 6, dans lequel le copolymère fluoré (A) comporte des motifs constitutifs (a1) à base de tétrafluoroéthylène, des motifs constitutifs (a2) à base d'un monomère hydrocarboné cyclique comportant un résidu d'anhydride d'acide et une liaison insaturée polymérisable, et des motifs constitutifs (a3) à base d'un monomère fluoré (à l'exclusion du tétrafluoroéthylène), en une proportion des motifs constitutifs (a1) de 50 à 99,89 % en moles, une proportion des motifs constitutifs (a2) de 0,01 à 5 % en moles et une proportion des motifs constitutifs (a3) de 0,1 à 49,99 % en moles par rapport à la quantité molaire totale des motifs constitutifs (a1), des motifs constitutifs (a2) et des motifs constitutifs (a3).

8. Matériau de revêtement pour un fil électrique résistant à la chaleur selon la revendication 7, dans lequel le monomère hydrocarboné cyclique est l'anhydride d'acide 5-norbornène-2,3-dicarboxylique.

9. Matériau de revêtement pour un fil électrique résistant à la chaleur selon la revendication 7 ou 8, dans lequel le monomère fluoré est au moins un membre choisi dans l'ensemble constitué par $CF_2=CFOR^{f1}$ (où $R^{f1}$ est un groupe perfluoroalkyle qui peut contenir un atome d'oxygène entre des atomes de carbone) et l'hexafluoropropylène.

10. Matériau de revêtement pour un fil électrique résistant à la chaleur selon l'une quelconque des revendications 1 à 9, dans lequel le copolymère fluoré (A) présente un indice de fluage de 0,5 à 15 g/10 min à 372°C sous une charge de 49 N.

11. Matériau de revêtement pour un fil électrique résistant à la chaleur selon l'une quelconque des revendications 1 à 10, dans lequel la composition de copolymère fluoré présente une rétention d'allongement en traction d'au moins 80 % lors d'une immersion pendant 48 heures au cours d'un test d'immersion dans une solution aqueuse à 50 % en poids d'acide sulfurique, et une rétention d'allongement en traction d'au moins 70 % lors d'une immersion dans de l'eau pure à 100°C pendant 150 heures.

12. Procédé pour produire le matériau de revêtement pour un fil électrique résistant à la chaleur tel que défini dans la revendication 1 ou 2, qui comprend le malaxage à l'état fondu du copolymère fluoré pouvant être moulé à l'état fondu (A) et de la résine thermoplastique non fluorée (B1) à une température d'au moins 400°C et inférieure à 450°C pour que soit préparée la composition de copolymère fluoré.

13. Procédé pour produire le matériau de revêtement pour un fil électrique résistant à la chaleur tel que défini dans la revendication 3 ou 4, qui comprend le malaxage à l'état fondu du copolymère fluoré pouvant être moulé à l'état fondu (A) et de la résine non fluorée (B2) à une température d'au moins 400°C et inférieure à 450°C pour que soit préparée la composition de copolymère fluoré.

14. Fil électrique comprenant un fil central et un revêtement fait du matériau de revêtement pour un fil électrique résistant à la chaleur tel que décrit dans l'une quelconque des revendications 1 à 11 formé sur la surface du fil central.

**EP 3 001 429 B1**

**Patent documents cited in the description**

- WO 2010110129 A
- JP 2006066329 A
- JP 2012113119 A
- JP 2007314720 A
- JP 11193312 A
- JP 2013108993 A
- JP 2013258714 A